# EUROPEAN PATENT APPLICATION

(11) **EP 1 729 172 A1**
(43) Date of publication of application: **06.12.2006**
(21) Application number: 06010680.4
(22) Date of filing: 23.05.2006
(51) Int. Cl.: G03B 21/62

(54) **Rear projection type screen**

(30) Priority: 30.05.2005 JP 2005157974
(71) Applicant: Miraial Co., Ltd., Tokyo (JP)
(72) Inventor: Hyobu, Yukihiro, Toshima-ku Tokyo (JP)
(74) Representative: Grünecker, Kinkeldey, Stockmair & Schwanhäusser Anwaltssozietät

(57) **Abstract**

In a screen using a microlens array, it is an object of the present invention to provide a low cost rear projection type screen with favorable contrast achieved by improving effect of blocking external light without reducing the luminance and the view angle characteristics and also to provide a rear projection type screen free from image quality degradation over a prolonged period due to its resistance to dust adhesion. The rear projection type screen has at least a transparent microlens array sheet 1 having a transparent microlens 3 which are arrayed on one surface thereof and which condenses parallel incident light on a focus, and a directional light absorbing sheet 2 having an aperture which transmits light from a specific direction and absorbs other light. The aperture is a pinhole array having an apertured pinhole 5 arrayed near the focus of the microlens 3. The aperture part of the pinhole is shaped into a truncated cone.

## Description

### BACKGROUND OF THE INVENTION

### Field of the Invention

The present invention relates to a rear projection type screen for use in a graphic display device such as a rear projection type projection television or the like.

### Description of the Background Art

In recent years, a rear projection type projection television has been expanding its market as a graphic display device capable of providing a large-screen image at low cost.

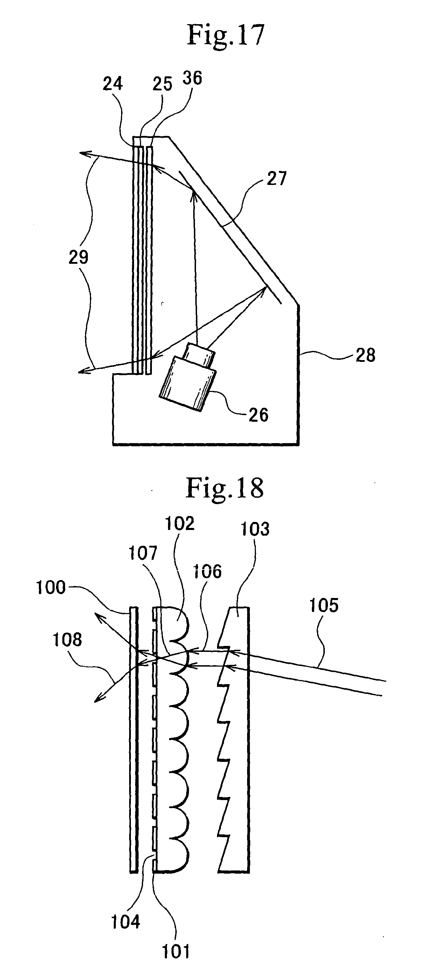

The luminance, contrast, and view angle characteristics of an image projected on a rear projection type projection television is largely influenced by characteristics of a rear projection type screen for use in this rear projection type projection television. Thus, for improved characteristics of the screen, a lenticular lens type has been well known in which divergent light 105 from a projector as shown in FIG. 18 is converted into parallel light 106 with a Fresnel lens sheet 103 and then the light converted into parallel light is condensed, with high efficiency, on a gap 104 of a black stripe 101 with a lenticular lens sheet 102 as a microcylindrical lens array before radiated and emanated. With those of this lenticular lens type, it has been commonly practiced that, in order to further improve the view angle characteristic, light transmitted through the black stripe 101 is further diffused by an optical diffusion sheet 100 to thereby provide radiation light 108 with a wide emergence angle. With such a configuration, the Fresnel lens sheet 103 and the lenticular lens sheet 102 have a function of improving the luminance while the black stripe 101 has a function of improving the contrast by suppressing reflection of external light on the surface.

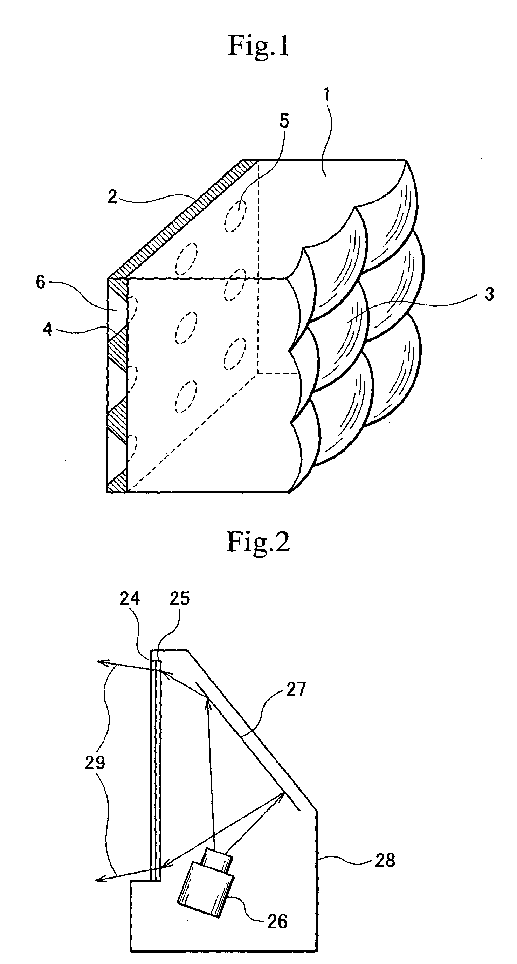

A rear projection type screen of the lenticular lens type has suffered from a problem that, due to a limitation that the lenticular lens sheet can condense light only in one dimensional direction, combined use of two lenticular lens sheets whose ridge lines are orthogonal to each other is required in order to control the emergence angle of light both in the vertical and horizontal directions of the screen, thus resulting in deterioration in the light use efficiency and also an increased number of components used which leads to cost increase. To solve such a problem, a rear projection type screen has been proposed which uses, instead of a lenticular lens sheet, a microlens array sheet with an array of microlenses having an oval surface with different curvatures in the vertical and horizontal directions (J Japanese Patent Laid-Open Publication No. 2000-131506 (Page. 3 in FIG. 2)).

Furthermore, an example of a rear projection type screen has been disclosed which is configured to be less susceptible to the effect of external light by arranging a louvered light absorbing wall row between a black stripe and a light diffusing sheet (Japanese Patent Laid-Open Publication No. 1999-167167 (Page. 5, FIG. 1)) .

However, the conventional rear projection type screen using the microlens array sheet suffers from a problem that a light blocking layer, that is, a pinhole array is fabricated by printing, a photolithographic method, or a self alignment method, thus making it difficult to provide the light blocking layer with some thickness, which results in difficulty in improving the effect of blocking external light such as an illumination lamp.

On the other hand, the louvered light absorbing wall row suffers from a problem that failure to use it with the black stripe results in a too large aperture in the light transmission direction to sufficiently block external light, thus resulting in an increased number of components used and thus cost increase which leads to high price.

Moreover, the conventional screen suffers from a problem that, due to its tendency to be charged, long-term usage results in image quality degradation caused by, for example, dust adhesion by static electricity.

### SUMMARY OF THE INVENTION

It is an object of the present invention, concerning a screen using a conventional microlens array, to provide a low-cost rear projection type screen with favorable contrast achieved by improving the effect of blocking external light without deterioration in the luminance and the view angle characteristics, and also to provide a rear projection type screen free from image quality degradation over a long-term period due to its resistance to dust adhesion.

One aspect of the present invention refers to a rear projection type screen including at least: a transparent microlens array sheet formed by arraying a microlens on one surface thereof, the microlens condensing parallelly incident light on a focus, and a directional light absorbing sheet having an aperture which transmits light from a specific direction and absorbs other light. The aperture of the directional light absorbing sheet is a pinhole array having an apertured pinhole arrayed near the focus of the microlens. An aperture part of the pinhole is shaped into a truncated cone.

The use of the directional light absorbing sheet having the pinhole shaped into a truncated cone in this manner permits effective absorption of light obliquely incident with an incidence angle of a certain value or more, such as illumination light, while keeping the aperture at minimum. This permits display of an image with high contrast and also permits focused light from the microlens to efficiently exit, which avoids a reduction in the luminance, thereby resolving the problem described above.

The rear projection type screen is configured such that the shape of the arrayed microlens is either of a square and a rectangle.

This configuration permits efficiently condensing all light from a projector and also permits finely filling even a microlens having different curvatures in the vertical and horizontal directions, thus resulting in improved luminance, thereby resolving the problem described above.

Further, the rear projection type screen is configured such that an interval for the arrayed pinhole is so formed as to become increasingly wider from a central part of the screen toward a peripheral part thereof.

This configuration permits light condensed on the microlens to effectively exit from the pinhole without use of a Fresnel lens for light emitted from the projector, thus providing a low-cost screen with high contrast, thereby resolving the problem described above.

The rear projection type screen is configured such that a surface of the aperture formed by the pinhole array of the microlens array sheet forms a lens surface that is so curved as to be convexed or concaved.

Curving the aperture in this manner permits controlling the spread angle of light exiting from the aperture, thus providing display of an image with a wide view angle, thereby resolving the problem described above.

The rear projection type screen is configured such that an upper bottom surface side of the aperture part shaped into the truncated cone forming the pinhole faces a side of the microlens array sheet, and such that the focus of the microlens is provided near the upper bottom surface.

This configuration prevents external light obliquely incident at a certain angle or more from reaching the aperture surface, thus preventing reflection of the external light on the surface and also permitting an improvement in the contrast, thereby resolving the problem described above.

The rear projection type screen is provided such that diffusing particles dispersed in a transparent resin are disposed inside the pinhole shaped into the truncated cone, or such that, on a surface opposing the microlens of the microlens array sheet, emboss for scattering light is formed on at least the surface exposed by the pinhole.

This configuration diffuses the outgoing light, providing a rear projection type screen with a wide view angle, thereby resolving the problem described above.

Further, the rear projection type screen is configured such that a lower bottom surface of the aperture part shaped into the truncated cone forming the pinhole faces a side of the microlens array sheet, such that a projection shaped into a truncated cone similar to the truncated cone forming the pinhole is formed integrally on a surface opposing the microlens of the microlens array sheet, and such that the projection shaped into the truncated cone fits with the truncated cone forming the pinhole.

Such a configuration permits accurate matching between the aperture position of the pinhole and the focus position of the microlens, thus providing a bright image without losing the luminance, thereby resolving the problem described above.

For the truncated cone forming the pinhole, the upper bottom surface thereof is tilted so that the height thereof is smallest at an end part thereof located farthest from the center of a screen surface. The angle of the tilt is formed so that the truncated cone located farther from the center of the screen has a larger angle of the tilt.

This permits projection light to exit from any point on the screen at a uniform radiation angle without adjusting the light divergence angle by using a Fresnel lens or the like on the light incidence side of the microlens sheet, thus permitting reducing the view angle dependency of the luminance distribution, thereby resolving the problem described above.

The upper bottom surface of the projection shaped into the truncated cone forms a light scattering surface for scattering light.

This permits widening the radiation angle of light exiting from the screen, thus resulting in a screen with a wider view angle, thereby resolving the problem described above.

Further, the exist side surface of the directional light absorbing sheet forms a light scattering surface for scattering light.

This permits reducing the amount of light entering on the view point from the surface of the directional light absorbing sheet, thus resulting in an improved black level on the surface of the directional light absorbing sheet and thus improved contrast of a display image, thereby resolving the problem described above.

The directional light absorbing sheet and the microlens array sheet are formed of thermoplastic polymeric material, and the softening point of the material forming the directional light absorbing sheet is higher than the softening point of the material forming the microlens array sheet. Then, the directional light absorbing sheet and the microlens array sheet are integrally formed by thermal fusion bonding.

This makes easier the fusion bonding between the directional light absorbing sheet and the microlens array. Moreover, the integration of the directional light absorbing sheet and the microlens array permits maintaining a stable relationship between the aperture position and the microlens focus position described above.

The thermoplastic material forming the directional light absorbing sheet is formed by either of dispersing carbon particles or metal particles.

This permits improving the light absorbing effect exerted by the directional light absorbing sheet, thereby resolving the problem described above.

The directional light absorbing sheet is formed of a metal plate having on a surface thereof a light absorbing layer.

This permits easily fabricating the rear projection type screen of the present invention at low cost, thereby resolving the problem described above.

The directional light absorbing sheet and the microlens array sheet are composed integrally by insert molding.

This permits integration of the directional light diffusing sheet and microlens array sheet simultaneously with manufacture thereof, and permits manufacture of a rear projection type screen with stable quality at low cost, thereby resolving the problem described above.

The directional light absorbing sheet has a thickness of approximately 40 µm or more.

This permits maintaining sufficient directivity of the directional light diffusing sheet, thereby resolving the problem described above.

A Fresnel lens sheet for controlling the spread angle of projection light is disposed in front of the light entrance surface of the microlens array sheet.

The use of the Fresnel lens in this manner makes easier manufacture of the rear projection type screen of the present invention, thereby resolving the problem described above.

Any of or all of the directional light absorbing sheet, the microlens array sheet, and the Fresnel lens sheet are formed of antistatic material or subjected to antistatic prevention processing so as to form the rear projection type screen of the present invention.

This prevents each component of the rear projection type screen of the present invention from being charged, thus avoiding deterioration in the screen characteristics due to dust adhesion, thereby resolving the problem described above.

The rear projection type screen of the present invention is not susceptible to the effect external light such as an illumination lamp or the like and also permits projection light from the projector to efficiently exit, thus providing effect that a high-contrast, bright image can be displayed even in a bright room.

Moreover, as a result, a bright image can be obtained even with a light source of a relatively low output, thus providing effect that the life of a light source used for the projector can be increased and also that the life of a liquid crystal display device can be improved as well as the display quality can be stabilized.

Furthermore, as a result, effect is provided that the cost of the rear projection type display device embodying the present invention can be reduced.

### BRIEF DESCRIPTION OF THE DRAWINGS

FIG. 1 is a main part perspective view of a rear projection type screen of the present invention;
FIG. 2 is a sectional view of a rear projection type display device using the rear projection type screen of the present invention;
FIG. 3 is a main part sectional view of the rear projection type screen of the present invention;
FIG. 4 is a main part sectional view of the rear projection type screen of the present invention;
FIG. 5 is a main part perspective view of the rear projection type screen of the present invention;
FIG. 6 is a main part sectional view of the rear projection type screen of the present invention;
FIG. 7 is a main part perspective view of the rear projection type screen of the present invention;
FIG. 8 is a main part sectional view of the rear projection type screen of the present invention;
FIG. 9 is a main part sectional view of the rear projection type screen of the present invention;
FIG. 10 is a main part perspective view of the rear projection type screen of the present invention;
FIG. 11 is a partial perspective view of the rear projection type screen of the present invention;
FIG. 12 is a partial sectional view of the rear projection type screen of the present invention;
FIG. 13 is a partial sectional view of the rear projection type screen of the present invention;
FIG. 14 is a partial sectional view of the rear projection type screen of the present invention;
FIG. 15 is a partial sectional view of the rear projection type screen of the present invention;
FIG. 16 is a partial sectional view of the rear projection type screen of the present invention;
FIG. 17 is a sectional view of the rear projection type display device using the rear projection type screen of the present invention; and
FIG. 18 is a sectional view of a conventional lenticular screen.

### DETAILED DESCRIPTION OF THE PREFERRED EMBODIMENTS

Hereinafter, a preferred embodiment implementing a rear projection type screen of the present invention will be described referring to the accompanying drawings.

FIG. 2 shows one embodiment of a rear-projection type display device employing the rear projection type screen of the present invention. The rear projection type screen of the present invention is composed of at least a microlens array sheet 25 and a directional light absorbing sheet 24. This screen and a frame 28 form a dark box, inside which a projector 26 and a mirror 27 are disposed. An optical image projected from the projector 26 is reflected by the mirror 27, then is condensed on a microlens array 2 by, for example, each of small regions divided in a matrix form, exits through pinholes, not shown, formed in the directional light absorbing sheet 24 to the outside of the dark box described above, and then enters the view point of an image observer again.

This rear projection type image display device can provide a brighter image with larger luminance of an optical image from the projector 26 and with higher transmittance of the screen. Moreover, with higher contrast of a projection image from the projector 26, more darkness inside the dark box, and smaller light reflection on the screen external surface, a display area has higher contrast.

It is an object of the present invention to provide a rear projection type screen capable of displaying an image with high luminance and high contrast by improving the transmittance of screen, reducing the brightness inside the dark box, and reducing the reflectance of the screen external surface.

The microlens array sheet 25 is formed by arraying, on at least one side surface thereof, microlenses for condensing parallel light. This surface, where the microlenses are formed, usually forms an aspherical surface; however, it is in many cases formed with a spherical surface which is easy to design and process. Such microlenses are usually arrayed in a matrix form in many cases, but may be alternatively closest-packed by being shifted in a houndstooth form.

On the other hand, the directional light absorbing sheet has a function of transmitting light having an incidence angle within the specific range while blocking any other light. Specifically, the present invention provides structure such that light condensed by the microlens described above is at least transmitted.

To achieve such structure, the directional light absorbing sheet of the present invention has pinholes each having an aperture shaped into a truncated cone, which is formed in a light absorbing substrate. This pinhole is formed near the focus of the microlens described above. Thus, light condensed on the focus by the microlens is transmitted without being interfered by the pinhole described above. Meanwhile, external light also enters the aperture. However, the aperture itself is the pinhole; therefore, the external light can enter inside the screen to a degree corresponding to the aperture ratio thereof, thus reducing effect that the light becomes lost or becomes a noise component inside the rear projection type display device. Furthermore, due to the truncated conical shape of the aperture, an obliquely incident external light component is blocked by the side surface of the truncated cone and thus does not enter inside the screen through the aperture; therefore, this pinhole functions as a pinhole having a practically smaller aperture ratio than a normal pinhole conventionally used. On the other hand, for external light component reflected on the screen surface, for the reason described above, reflection light from the surface of the aperture part becomes practically smaller than the normal pinhole. Thus, the rear projection type screen of the present invention has a higher black level than a conventional rear projection type screen. Consequently, an image displayed on the screen of the present invention can provide high luminance (that is, white level) and a high black level even under the presence of external light, thus providing a high quality image provided with high contrast.

It is another object of the present invention to provide a rear projection type screen that avoids a change in the display image quality with time due to dust adhesion to the screen surface by electrostatic.

That is, in the present invention, the microlens array sheet and the directional light absorbing sheet are formed of antistatic material or subjected to antistatic processing so as not to be charged. Consequently, the screen of the present invention is free from accumulation of dust due to electrostatic charge even under long-term usage and capable of maintaining favorable display quality over a prolonged period.

Specifically, each element used for the rear projection type screen of the present invention is usually formed of polymeric material. The directional light absorbing sheet is fabricated by using polymeric material formed of material containing dye or a colorant or light absorbing material, while the microlens array sheet is formed of transparent polymeric material.

In the directional light absorbing sheet, the carbon particles or a metal powder can be mixed to improve the conductivity. In addition, in the directional light absorbing sheet and the microlens array sheet, a soluble type surfactant agent, a copolymerization type surfactant agent, or a polymer type surfactant agent may be kneaded inside, or surface treatment may be performed by using these agents to provide antistatic material.

The rear projection type screen of the present invention may have the directional light absorbing sheet and the microlens array sheet both formed by, for example, roll molding or press molding, or, depending on the sheet thickness, injection molding. In this operation, for example, performing so-called insert molding, by which directional light absorbing sheet is molded and thereafter the microlens array sheet is superimposed thereon to be subjected to molding processing, permits fabrication by accurately matching the position of the microlens formed on the microlens sheet with the position of the pinhole formed on the directional light absorbing sheet.

In performing such insert molding, in a case where the softening point of the polymeric material forming the directional light absorbing sheet is higher than the softening point of the polymeric material forming the microlens array sheet, a larger degree of freedom in the molding conditions can be provided, and also more favorable accuracy can be provided.

Using what is obtained by forming the directional light absorbing sheet with metallic material such as, for example, aluminum or the like, and providing thereon light absorbing treatment, such as black alumite treatment or the like, can make it easier to perform the insert molding described above.

Hereinafter, embodiments of an illumination device of the present invention will be described in detail referring to the drawings.

### [Embodiment 1]

FIG. 1 is a main part enlarged perspective sectional view showing the rear projection type screen according to an embodiment 1 of the present invention. In FIG. 1, a microlens array sheet 1 is a transparent sheet having microlenses 3 formed on one surface thereof. The microlens 3 is a very small lens having a surface thereof formed with a spherical, an oval, an aspherical surface or the like, and thus is formed into a shape in accordance with various conditions such as usage and the like. The microlens array sheet 1 may be formed of transparent polymeric material, such as acrylic resin, polycarbonate resin, cycloolefin resin, polyethylene resin, or the like.

The microlens 3 is formed with a spherical surface, an oval surface, or the like with the center of symmetry lying at the center of the divided square or rectangular region. This divided square or rectangular region has a pitch of 100 to 500 µm, and it is preferable that this pitch is typically 150 to 220 µm.

It is desirable that the sheet thickness of the microlens array sheet 1 be approximately 400 µm or more, but it may be smaller than this depending on the refractive index of material used and the pitch of the microlens array.

The region where the microlens 3 is formed is a very small region as described above; therefore, in individual regions of the microlenses 3, a projection image from the projector can be assumed as approximately parallel light.

Parallel light entering from the microlens 3 side is condensed on a predetermined point (focus) at the directional light absorbing sheet side. The focus at this directional light absorbing sheet side is usually located at one point when the microlens 3 is a spherical lens; however, when the microlens 3 is an oval lens, this focus becomes non-point, so that condensation is performed at two different points, i.e., along the longer axis and shorter axis of the oval. However, in either case, these focuses are located near the pinhole 5 where the directional light absorbing sheet 2 is formed. Here, the focus of the microlens 3 is designed to be located inside the directional light absorbing sheet 2, but may be located at the position where this focus matches with the directional light absorbing sheet 2 or the position outside the directional light absorbing sheet 2. Thus, these focuses are set in accordance with the various conditions.

The size (diameter) of the pinhole 5, near the focus of the microlens 3 described above, is almost equal to a beam of incident light condensed by the microlens 3 or is set larger than this beam. This makes all of incident light condensed by the microlens 3 to be transmitted to the outside and also prevents as much as possible external light from entering inside the microlens array sheet 1. The shape of the pinhole 5 is appropriately adapted to be a circle, an oval, a quadrangle (square, rectangle), or the like in accordance with the shape of light focused by the microlens 3.

An aperture 6 of the pinhole 5 is shaped into a truncated cone as shown in FIG. 1. In the example shown in FIG. 1, the upper bottom surface (right side surface in FIG. 1) of the aperture 6 coincides with the pinhole 5, and the lower bottom surface (left side surface in FIG. 1) thereof has the shape of an open trapezoid conical shape (the shape of cross section is trapezoid). The shape of this aperture 6 is a conical shape shown in FIG. 1 when incident light is adapted to spread vertically and horizontally at the same angle. However, in accordance with required conditions, this shape may be appropriately adapted to be a laterally or longitudinally long oval circular cone, a quadrangular (square or rectangular) cone or the like. Moreover, as described later, this shape may be a stepped truncated conical shape.

The portion of the directional light absorbing sheet 2 excluding the apertures 6 is formed of light absorbing material, so that light illuminated on the portion excluding the apertures 6 is absorbed and thus not transmitted. Used as this light absorbing material includes: a material obtained by mixing the metal powder or the carbon powder in polymeric material and coloring it, and a material obtained by mixing a black color dye for coloring.

The portion of the aperture 6 of the directional light absorbing sheet 2 is filled with transparent synthetic resin or hollowed, depending on its design. The same material as the microlens array sheet 1 may be used, but usually the ratio of refractive index between the aperture 6 of the directional light absorbing sheet 2 and the microlens array sheet 1 described above is set so that light passing through the pinhole 5 at this boundary toward the outside is deflected in an adequate direction. More specifically, a transparent material is used which has a refractive index determined in relation to the refractive index of the material used for the microlens array sheet 1, that is, the refractive index at which light passing through the pinhole 5 toward the outside is diffused.

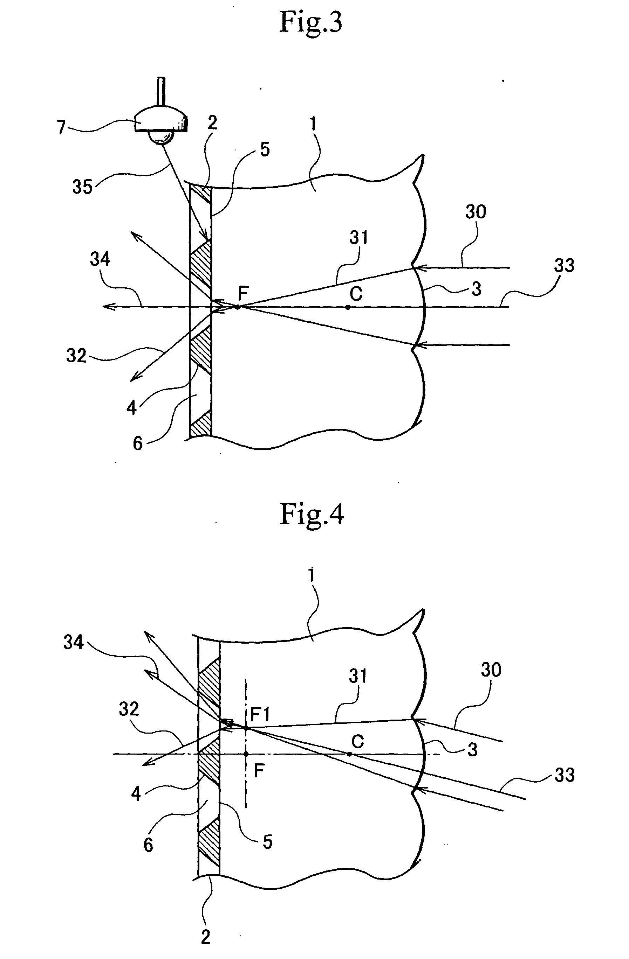

FIG. 3 shows the action of light for the rear projection type screen shown in FIG. 1. FIG. 3 shows parallel light perpendicularly incident on the screen surface. As shown in this figure, the light is incident perpendicularly on the central and surrounding area of the screen surface.

Here, a description will be given, referring to a case where the microlens 3 is a spherical lens. Assuming that the center of the spherical surface forming the microlens 3 is C, the light entering toward the center C travels straight directly and passes through a focus F. The position of the focus F is determined by the refractive index of the material forming the microlens array sheet 1, a curvature radius of the microlens 3, and a refractive index of the air. In FIG. 3, the focus F is located inside the microlens sheet 1, but it may be located outside the microlens array sheet 1 as long as it is located near the pinhole 5.

On the other hand, light 30 entering the end part of the microlens 3 is refracted by the microlens 3, passes through the focus F, is made incident on a different surface of the microlens array sheet 1, is refracted in accordance with Snell's law, and then exits as a ray 32. The refractive index of the material forming the microlens array sheet 1 is larger than that of a medium (air) at the exit side; therefore, the emergence angle of the ray 32 is wider than the incidence angle thereof on the incidence surface, which permits a wider view angle.

The aperture 6 of the directional light absorbing sheet 2 is shaped into a circular truncated cone. The vertex angle of this circular truncated cone is equal to or larger than the emergence angle of light from the microlens array sheet 1. Thus, light exiting from the microlens array sheet 1 is not absorbed by the directional light absorbing sheet 2 while exiting therefrom.

On the other hand, like external light 35, light entering the screen from an illumination lamp 7 at a large incidence angle is absorbed by the directional light absorbing sheet 2. Even when the incidence angle of this external light is smaller than the vertex angle of the circular truncated cone, all the light excluding those directly entering the pinhole 5 is absorbed by the directional light absorbing sheet 2. In many cases, an interior illumination lamp is provided at the ceiling, and external light from the window and the like also enter from the side surface of the rear projection type display device in many cases. Therefore, it is assumed that a large portion of the external light enters at an incidence angle larger than the vertex angle of the circular truncated cone. Thus, the screen of the present invention absorbs much of external light and thus is capable of achieving a high black level.

Light entering inside the screen through the pinhole 5, which has an incidence angle approximately smaller than the vertex angle of the aperture 6 of the circular truncated cone, is absorbed on the side surface 4 of the aperture 6 of the circular truncated cone and thus is reduced more than light entering inside the screen when a conventional pinhole is employed. That is, light entering inside the dark box of the rear projection type display device can is reduced more than can be achieved by the conventional one.

Consequently, the rear projection type screen of the present invention can improve the contrast of the display image.

Referring to FIG. 4, a description will be given concerning the structure of the screen of the present invention at a portion where parallel light is incident on the screen surface in such a manner as to be tilted with respect thereto. In this case, action exerted on external light is the same as the case described in FIG. 3 and thus omitted from the description.

In FIG. 4, of incident light, that entering toward the center C of the microlens 3 is transmitted linearly through the inside of the microlens array sheet 1, and passes through an apparent focus Fl, reaching a different surface. This apparent focus Fl is substantially on the same plane as the focus F for perpendicular incident light. On the other hand, the light 30 entering the end part of the microlens 3 is refracted on the surface of the microlens 3 and condensed on the apparent focus Fl, reaching a different surface.

The pinhole 5 formed in the directional light absorbing sheet 2 is provided near the apparent focus Fl. That is, the pinhole 5 is provided near the focus that practically condenses light. The center of this pinhole 5 can be determined by the incidence angle of light entering toward the center C of the microlens 3 and the distance between the center C and the different surface. For example, if the light incidence angle is 30 degrees and the distance between the center C and the different surface is 250 µm, it can be recognized that the center of the pinhole 5 may be so formed in such a manner as to be shifted upward by approximately 145 µm with respect to the one shown in FIG. 3.

As shown in FIG. 2, the emergence angle of light from the projector is different between the center and end part of the screen. This applies to both the vertical and horizontal directions of the screen. The degree of this difference depends on the specifications of the projector, the image size, and the like. Therefore, the rear projection type screen of the present invention is formed so that, in accordance with the configuration of the rear projection type display device, the arrangement interval of the pinhole 5 is adapted to become increasingly wider from the screen central part toward the peripheral part thereof so that a projection image from the projector can efficiently exit through the pinhole.

### [Embodiment 2]

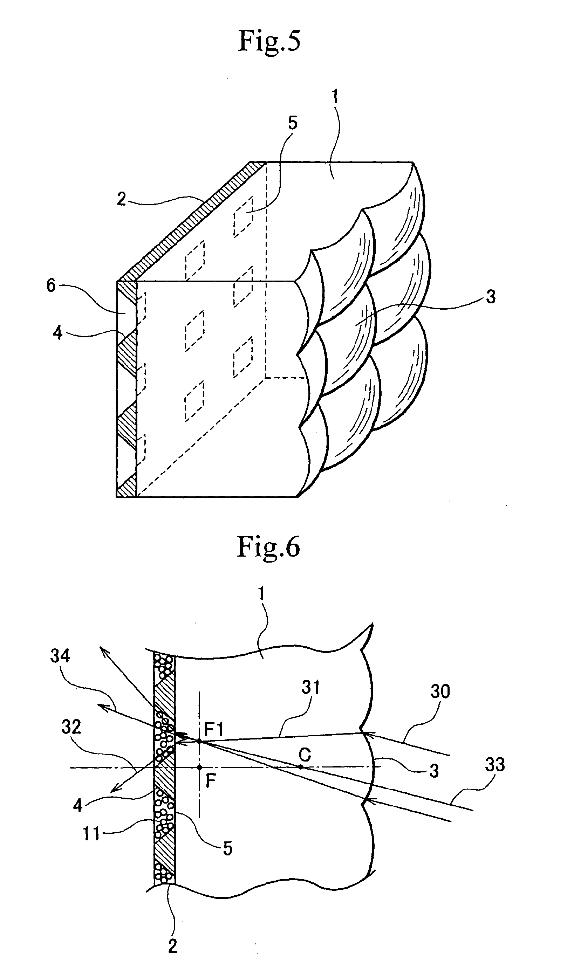

FIG. 5 is an enlarged sectional view schematically showing another embodiment of the rear projection type screen according to the present invention. The present embodiment shown in FIG. 5 differs from the embodiment shown in FIG. 1 in that the shape of the pinhole 5 is a square or a rectangle and in that the shape of the aperture 6 is a square truncated cone. For other portions thereof, their functions are the same as those in the first embodiment and thus are omitted from the description.

In the embodiment shown in FIG. 5, since the shape of the pinhole 5 is a square or a rectangle and the shape of the aperture part 6 is a square truncated cone, the directional light absorbing sheet 2 can be provided with anisotropy in the vertical direction and horizontal direction. As described above, illumination light and external light from the window or the like enter the screen from the vertical and the horizontal directions in many cases, and thus providing such structure permits efficient blockage of individual external light.

Furthermore, when mutually different angles of emergence from the screen in the vertical and horizontal directions are provided, that is, when an oval lens is used which has different spherical radiuses for the vertical and the horizontal directions of the microlens 3, optimizing the vertex angles in the vertical and horizontal directions of the square truncated cone of the aperture 6 with respect to the emergence angle described above permits maximizing both the emergence efficiency and the blocking efficiency.

Furthermore, forming the cross section of the aperture 6 into a square truncated cone makes it extremely easier to process a die for forming this shape by press molding or roll forming, which permits manufacture of the directional light absorbing sheet at low cost.

### [Embodiment 3]

FIG. 6 is an enlarged sectional view schematically showing one embodiment of the rear projection type screen according to the present invention. FIG. 6 is different from FIG. 4 in that light diffusing particles 11 are filled, together with a transparent binder, in the aperture formed in the directional light absorbing sheet 2.

As shown in FIG. 4, shifting outward the position of the pinhole 5 at the end part of the screen permits light from the projector to efficiently exit from the screen surface. However, this results in a difference in the irradiation distribution of the outgoing light between the screen central part and the screen end part and thus a difference in the view angle dependency therebetween. That is, the brightness of an image on the screen varies depending on the angle from which the image is viewed.

FIG. 6 refers to a case where, even in such a case described above, the bias in the irradiation distribution of light exiting from the screen is reduced to thereby permit observation of an image on the screen with uniform luminance from any angle. That is, light condensed on the focus Fl by the microlens 3 enters the aperture, which is shaped into a circular truncated cone, through the pinhole 5. Since the light diffusing particles 11 filled, together with the transparent binder, not shown, in this aperture, the light entering the aperture exits therefrom in a diffused manner. Consequently, bias in the radiation distribution of the exiting light is uniformized, thereby permitting an improvement in the view angle dependency.

As the light diffusing particles, transparent or translucent beads can be used which are formed of transparent polymers such as acrylic resin, polystyrene resin, or the like. The particle diameter and the refractive index of these light diffusing particles can be adjusted to thereby control the diffusion performance of light exiting from the screen. For example, beads of acrylic resin or styrene resin described above are used, those which have a particle diameter of approximately 1 to 20 µm may be provided with adequate particle distribution.

Although not clearly shown in FIG. 6, the light diffusing particles 11 described above may also be applied to, other than the inside of the aperture, the surface of the directional light absorbing sheet 2. This suppresses gloss reflection on the surface of the directional light absorbing sheet 2, thereby permitting achieving a blacker screen surface.

### [Embodiment 4]

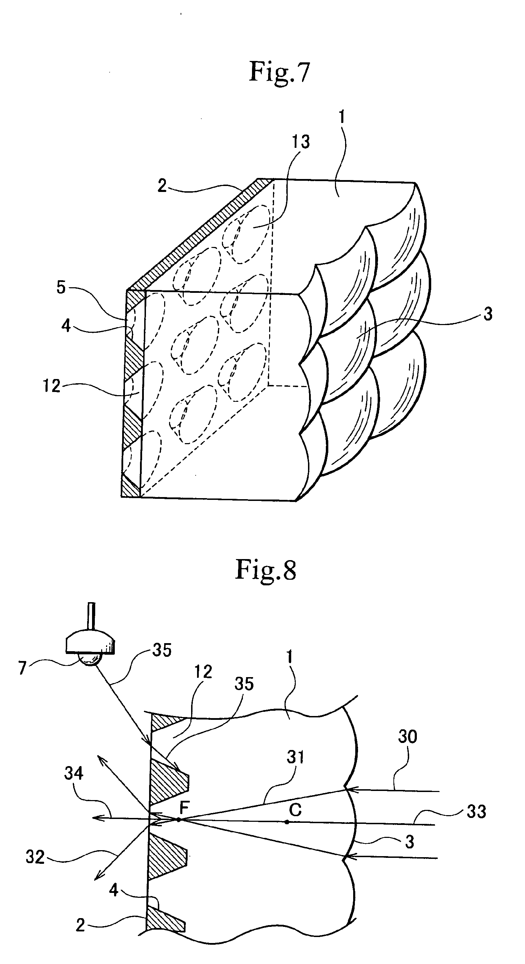

FIG. 7 is an enlarged perspective sectional view schematically showing another embodiment of the rear projection type screen according to the present invention. In the embodiment shown in FIG. 7, a projection 12 shaped into a circular truncated cone is formed at a position corresponding to the condensing point of the microlens 3 in the microlens array sheet 1. This projection 12 may be provided separately from the microlens array sheet 1, but it is preferable that the projection 12 be integrally formed without forming an optical interface.

The projection 12 is formed with a lower bottom surface 13 thereof facing the microlens 3 side, with an upper bottom surface 5 thereof facing the screen surface side, and with a side surface 4 thereof so tilted as to open toward the microlens 3 side.

The projection 12 fits with the pinhole provided in the directional light absorbing sheet 2. The portion of the directional light absorbing sheet 2 excluding the pinhole is formed of light absorbing material.

FIG. 8 is an explanatory diagram describing the action of light near the central part of the rear projection type screen of the present invention shown in FIG. 7. In FIG. 8, among parallel light entering the microlens 3, light 33 entering toward the center C of the lens directly travels straight, passes through the focus F, and exist directly from the screen exit surface. The pinhole of the directional light absorbing sheet 2 corresponds to the upper bottom surface part of the projection 12, and the focus F is located near this pinhole. In FIG. 8, the focus F is located inside the projection 12, but may be located outside the screen as long as it is located near the pinhole.

On the other hand, among parallel light entering the microlens 3, the light 30 entering the peripheral part of the lens is refracted on the surface of the microlens 3 to be thereby condensed on the focus F, refracted on the upper bottom surface of the projection 12, that is, the pinhole, and then exits from the screen surface. Due to the position of the focus F located near the pinhole, the light condensed on the microlens 3 efficiently exits from the screen while being hardly absorbed on the side surface 4 of the aperture of the circular truncated cone formed in the directional light absorbing sheet 2.

On the other hand, external light from the illumination lamp 7 and the like obliquely enters the screen surface as shown by the light 35. Among such external light, the light illuminated on the surface where the pinhole of the directional light absorbing sheet 2 is not formed is directly absorbed by the directional light absorbing sheet 2 without entering inside the screen and also without entering the view point of the observer. In addition, as shown in FIG. 8, like the light 35, light entering inside the pinhole at a certain incidence angle or more is also refracted to enter inside the projection 12 and is then absorbed on the side surface 4 without entering inside the screen. This light blocking effect is larger for a smaller aperture ratio of the directional light absorbing sheet 2 and for a larger thickness of the directional light absorbing sheet 2. Typically, it is preferable that the thickness of this directional light absorbing sheet 2 be 40 µm or more.

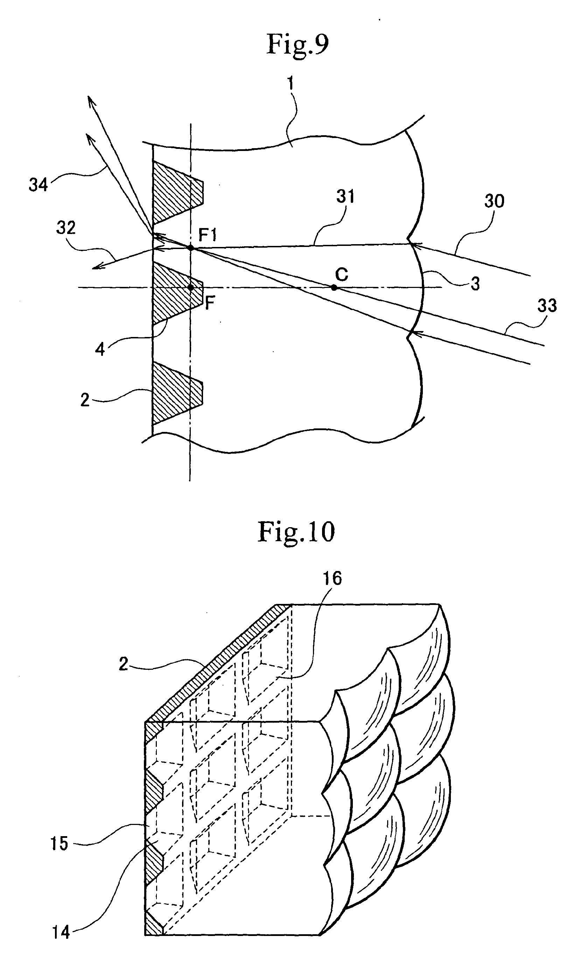

FIG. 9 is an explanatory diagram describing the action of light at the peripheral part of the rear projection type screen of the present embodiment. At the peripheral edge part of the screen, light entering from the projector to the microlens 3 tilts with respect to the optical axis of the microlens 3. However, of incident rays, the ray entering toward the center C of the curvature of the microlens travels straight without being refracted on the surface of the microlens 3, passes through an apparent focus Fl, and exits from the upper bottom surface of the projection by being refracted as indicated by ray 34

On the other hand, the light 30 entering the peripheral part of the microlens 3 is refracted on the surface of the microlens 3 to be thereby condensed on the apparent focus Fl, and then exits from the upper bottom surface of the projection, and is refracted by being refracted as indicated by like the ray 32.

Needless to say, the projection shaped into a circular truncated cone is formed so that the rotation center thereof is located near the apparent focus. The amount of shift from the focus F to this apparent focus Fl is determined by the distance between the center C of the curvature radius of the microlens 3 and the focus F and also by the angle formed by the light 33 and a straight line CF. In other words, it is determined by the curvature radius of the microlens 3, the refractive index of the microlens array sheet 1, and the angle formed by the light 33 and the straight line CF.

Therefore, the projection formed on the microlens array sheet 1, in other words, the interval between the pinholes formed in the directional light absorbing sheet 2 is formed increasingly wider at a portion increasingly farther from the center of the screen. This permits efficiently leading all light entering from the projector to the microlens array sheet 1 of the screen of the present invention to the pinhole array formed in the directional light absorbing sheet 2, thereby achieving an image with high luminance.

At this point, there arises a difference in the pixel interval between the central part and the peripheral part of the screen. The degree of this difference is at most several hundreds µm, which does not create any sense of discomfort in an image actually observed.

### [Embodiment 5]

FIG. 10 is an enlarged sectional view schematically showing another embodiment of the rear projection type screen according to the present invention. FIG. 10 differs from FIG. 7 in that the shape of the projection formed on the microlens array or the shape of the aperture of the pinhole formed in the directional light absorbing sheet 2 is a square truncated cone. That is, an array of projections shaped into square truncated cones is so formed as to oppose the microlens array. This projection is composed of, with a tilted side surface 14, the lower bottom surface 16 and the upper bottom surface 15 as a pinhole that continue to the microlens array sheet. The clearance of the projections shaped into square truncated cones is filled with the directional light absorbing sheet 2.

Providing such structure can, as is the case with the second embodiment, provides the directional light absorbing sheet 2 with anisotropy in the directions within the plane thereof, and can optimize the emergence efficiency even in a case where a microlens array is used which is provided with anisotropy in the vertical and the horizontal radiation angles.

Moreover, shaping the projection and the pinhole aperture into a square truncated cone makes it easier to process a mold for manufacturing these components, thereby achieving a reduction in the manufacturing costs.

### [Embodiment 6]

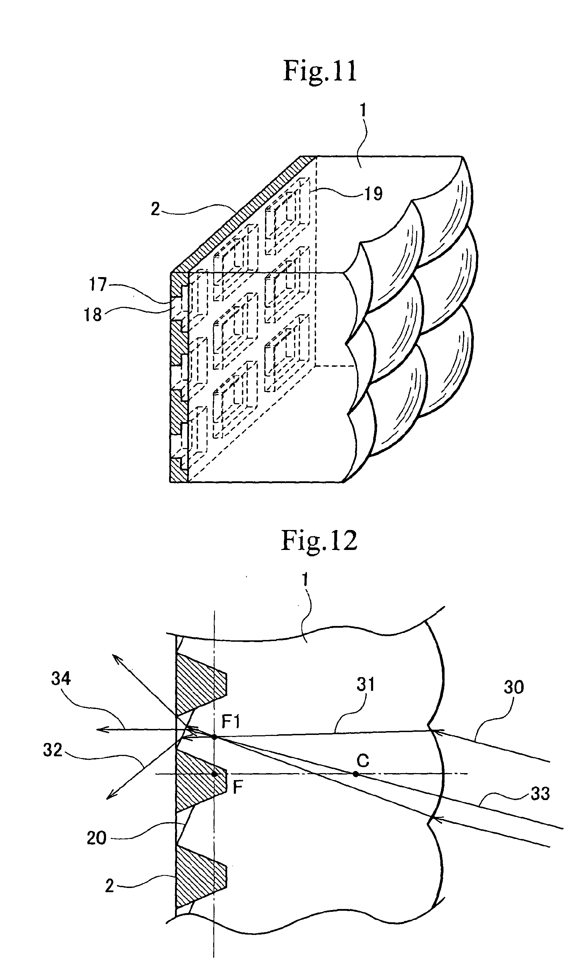

FIG. 11 is an enlarged sectional view schematically showing another embodiment of the rear projection type screen according to the present invention. The shape of the projection provided on the microlens array sheet 1 of the rear projection type screen shown in FIG. 11 and the shape of the aperture of the pinhole provided in the directional light absorbing sheet 2 thereof are so formed as to be increasingly more stepped (stepped truncated conical shape) toward the side of the microlens array sheet 1. In this case, a side surface 17 of the aperture is so formed as to be oriented discontinuously and substantially perpendicularly. In the present invention, also assumed as a truncated cone is the shape that becomes increasingly wider in a step-like manner from the upper bottom surface 18 toward the lower bottom surface 19. An infinite number of very small steps using this step form the aperture of the square truncated cone shown in FIG. 10.

Setting the number of steps of the truncated cone shown in FIG. 11 at approximately 2 to 5 makes it extremely easier to fabricate these projections and pinhole apertures. This permits maintaining the characteristics of the directional light absorbing sheet described above almost as it is.

### [Embodiment 7]

FIG. 12 is an enlarged sectional view schematically showing another embodiment of the rear projection type screen according to the present invention. In the embodiment shown in FIG. 12, an upper bottom surface 20 of the projection shown in embodiments from 4 to 6 is so formed as to be tilted. The angle of this tilt is formed so that the emergence angle when the light 33 entering the center C of the curvature radius of the microlens 3 passes through the apparent focus Fl and then exits from the upper bottom surface 20 described above is zero degrees. That is, the ray 34 exits from the screen surface perpendicularly thereto. Such an angle can be easily obtained through Snell's law if the angle of light incidence on the upper bottom surface and the refractive index of the microlens array sheet 1 are known.

The tilt of the light 33 becomes increasingly larger from the center of the rear projection type screen toward the peripheral part thereof, so that the tilt of the upper bottom surface 20 of the projection also becomes increasingly larger toward the peripheral part of the screen. In other words, the tilt angle of the upper bottom surface 20 described above is formed so that it becomes increasingly smaller at a truncated cone increasingly farther from the center of the screen, and the height of this upper bottom surface 20 is lowest at the end part which is located farthest from the center of the screen surface.

Accordingly, this provides uniform radiation distribution of light exiting from any position of the screen without correcting the spread angle of light from the projector by use of the Fresnel lens as is practiced by a conventional rear projection type screen, thereby permitting a reduction in the view angle dependency on the screen position of an image formed on the screen.

### [Embodiment 8]

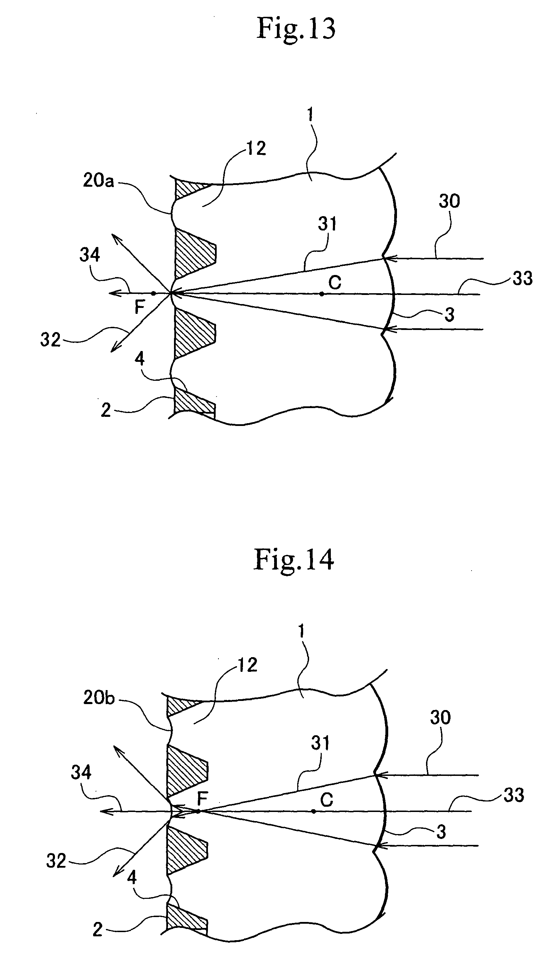

FIG. 13 is an explanatory enlarged sectional view schematically showing another embodiment of the rear projection type screen according to the present invention. In FIG. 13, the pinhole-side surface of the projection 12 forms a convex surface 20a that is convex outwardly. In the present invention, even an aperture having a convex surface as described above is referred to as an aperture shaped into a truncated cone.

FIG. 13 shows the action of light located near the center of the screen. Thus, the light 33 entering toward the center C of the curvature radius of the microlens 3 enters inside the microlens array sheet 1 without being refracted, and exits as the ray 34 to the outside from the convex surface of the projection 12. In the case of the present embodiment, a focus F of the microlens 3 is located outside the microlens array sheet 1. On the other hand, the light 30 entering the peripheral part of the microlens 3 is refracted at the time of its entrance and then propagates as the ray 31 through the inside of the microlens array sheet 3 to be thereby condensed on the focus F. The ray 31 reaches the convex surface 20a of the projection 12 before reaching the focus F, is condensed on the combined focus of the microlens 3, not shown, and the convex surface 20a, and then exits as the ray 32. Forming a combined lens system of the microlens 3 and the convex surface 20a of the projection 12 in this manner permits controlling the degree of divergence of outgoing light over a wide range, thereby permitting a wider view angle of the screen.

In the present embodiment, the vertex of the convex surface 20a of the projection 12 protrudes from the surface of the directional light absorbing sheet 2. However, needless to say, the vertex of the convex surface 20a may be located at the same level as the surface of the directional light absorbing sheet 2 or may be recessed therefrom. In this case, it is also preferable that the tilt surface of the projection 12 and an aperture tilt surface 4 formed in the directional light absorbing sheet 2 substantially coincide with each other.

FIG. 13 shows the neighborhood of the center of the screen, with the position of the focus F transferring to the apparent focus that shifts outwardly of the screen as it approaches increasingly closer to the peripheral part of the screen. Accordingly, needless to say, the projection 12 also transfers to the neighborhood of the apparent focus.

### [Embodiment 9]

FIG. 14 is an explanatory enlarged sectional view schematically showing another embodiment of the rear projection type screen according to the present invention. The embodiment shown in FIG. 14 differs from the embodiment shown in FIG. 12 in that the pinhole-side surface of the projection 12 forms a concave surface 20b that is concave inwardly. In the present invention, even an aperture having a concave surface as described above is referred to as an aperture shaped into a truncated cone.

FIG. 14 shows the action of light located near the center of the screen. Thus, the light 33 entering toward the center C of the curvature radius of the microlens 3 enters inside the microlens array sheet 1 without being refracted, passes through the focus F, and exits as the ray 34 to the outside from the concave surface of the projection 12. On the other hand, the light 30 entering the peripheral part of the microlens 3 is refracted at the time of its entrance and then propagates as the ray 31 through the inside of the microlens array sheet 3 to be thereby condensed on the focus F. After being condensed on the focus F, the ray 31 reaches the concave surface 20b of the projection 12, and then exits as the ray 32 as if it were condensed on the combined focus of the microlens 3, not shown, and the concave surface 20b. Forming a combined lens system of the microlens 3 and the concave surface 20b of the projection 12 in this manner permits controlling the degree of divergence of the outgoing light over a wide range, thereby permitting a wider view angle of the screen.

In the present embodiment, the vertex of the concave surface 20b of the projection 12 is located at the position recessed from the surface of the directional light absorbing sheet 2. However, needless to say, the vertex of the concave surface 20b may be located at the same level as the surface of the directional light absorbing sheet 2 or may protrude therefrom. In this case, it is also preferable that the tilt surface of the convex part 12 and an aperture tilt surface 4 formed in the directional light absorbing sheet 2 substantially coincides with each other.

FIG. 14 shows the neighborhood of the center of the screen, with the position of the focus F transferring toward the apparent focus shifted outwardly of the screen as it approaches increasingly closer to the peripheral part of the screen. Accordingly, needless to say, the projection 12 also transfers to the neighborhood of the apparent focus.

### [Embodiment 10]

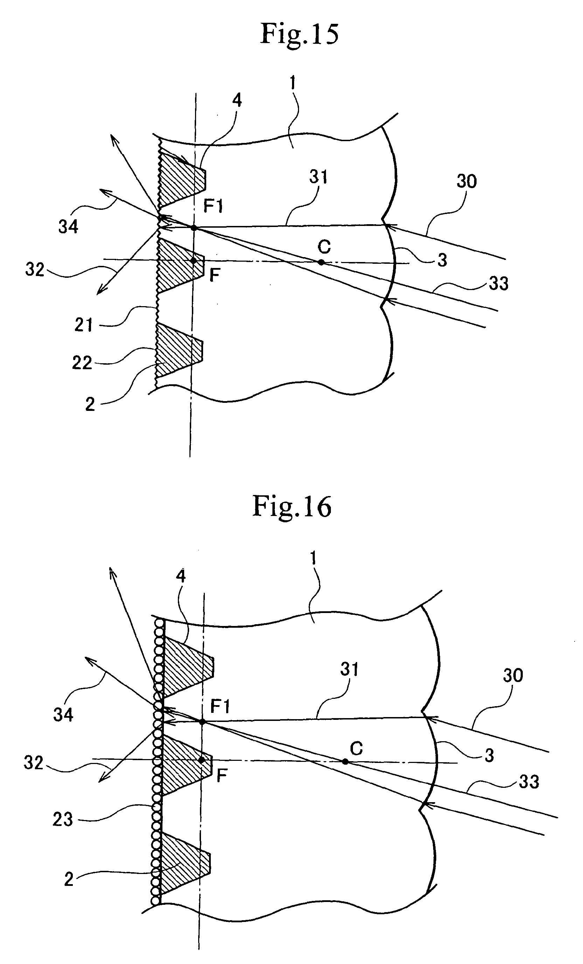

FIG. 15 is an explanatory partial enlarged sectional view schematically showing another embodiment of the rear projection type screen according to the present invention. FIG. 15 differs from FIG. 9 in that the first light scattering surface 21 is formed on the surface of the projection while a second light scattering surface 22 is formed on the surface of the directional light absorbing sheet 2. By forming the first light scattering surface on the surface of the projection, after the lights 30 and 33 entering from the projector is transmitted through the screen, the radiation angles at which it exits from the screen surface can be widened, thus permitting image display with a wider view angle.

Forming the second light scattering surface 22 on the surface of the directional light absorbing sheet 2 causes external light to be diffused on this second light diffusing surface 22, thus avoiding this external light from entering the view point of a person viewing an image, which permits an improvement in the substantial black level on the surface of the directional light absorbing sheet 2. Consequently, a brilliant image can be displayed without causing a reduction in the contrast even in a bright room.

This first light scattering surface 21 effectively functions even in cases such as where the surface of the projection is provided with the tilted upper bottom surface shown in FIG. 12, where this surface is provided with the convex surface 20a shown in FIG. 13, and where this surface is provided with the concave surface 20b shown in FIG. 14.

More specifically, these first light scattering surface 21 and second light scattering surface 22 can be provided by forming on the surface concave and convex structure that is equivalent or slightly larger than the light wavelength level. That is, for example, the first light scattering surface 21 and the second light scattering surface 22 can be fabricated by forming an emboss pattern on the surfaces thereof by using a die whose surface is formed with the emboss pattern. Alternatively, after the screen is processed as shown in FIGS. 8 and 9, their surfaces may be formed to be rough by sandblast processing or photo-etching processing.

It is preferable that the first light scattering surface 21 have a haze value of approximately 55 to 100%, and the second light scattering surface 22 have a haze value of approximately 35 to 65%.

### [Embodiment 11]

FIG. 16 is an explanatory enlarged sectional view schematically showing another embodiment of the rear projection type screen according to the present invention. In FIG. 16, light diffusing particles 23 are applied and fixated via a binder, not shown, over the entire exit surface of the rear projection type screen that is formed by the upper bottom surface of the projection and the surface of the directional light diffusing sheet 2. The function of these light diffusing particles 23 is the same as that of the first light diffusing surface and the second light diffusing surface in the embodiment 10. However, in the present embodiment, although the use of the light diffusing particles 23 results in that both the surface of the projection and the surface of the directional light diffusing sheet 2 have the same haze value, the external light is reflected in the direction almost equal to the entrance direction, thus permitting successfully suppressing the susceptibility to the external light and thus improving the black level. Moreover, for light transmitted from the microlens array sheet 1, sufficient light diffusion performance is provided.

As the light diffusing particles 23, transparent resin beads as are used in the case of the embodiment 3 can be used.

### [Embodiment 12]

FIG. 17 is an explanatory sectional view schematically showing a configuration example of a rear projection type image display device employing the rear projection type screen of the present invention. In the present embodiment, the rear projection type screen is composed of the directional light absorbing sheet 24, the microlens array sheet 25, and a Fresnel lens sheet 36. Thus, correcting the spread angle of projection light from the projector 26 into parallel light by using the Fresnel lens 36 and then irradiating it to the microlens array sheet 25 results in an increased number of components used, but advantageously permits arrangement of the pinhole formed in the directional light absorbing sheet 24 and the microlens substantially on the same optical axis, thereby making it easier to process the directional light absorbing sheet 24.

### [Modified embodiment]

In the embodiment described above, a description with reference thereto has been given concerning different embodiments between the case where the aperture is so shaped as to widen outwardly as shown in FIG. 1 and the case where the aperture is so formed as to widen inwardly as shown in FIG. 7, although not limited thereto. Therefore, in the modes listed in the embodiments respectively, those applicable can be all combined together for either of the aperture widening outwardly and the aperture widening inwardly. Further, the modes listed in the embodiments respectively can also be all combined together.

In each embodiment described above, the directional light absorbing sheet 2 is provided integrally with the microlens array sheet 1, but the directional light absorbing sheet 2 may be provided to an optical component other than the microlens array sheet 1. It can be used for any optical component which is required to achieve efficient emergence of outgoing light. In this case, as the configuration of the directional light absorbing sheet 2, the mode corresponding to each of the optical components is to be provided by adequately selecting from among the embodiments described above. A plurality of the embodiments may be combined together.

This permits efficient emergence of outgoing light while each of the optical components is not influenced by the external light, thus providing a high-contrast, bright image even in the bright room.

## Claims

1. A rear projection type screen comprising at least:
a transparent microlens array sheet formed by arraying a microlens on one surface thereof, the microlens condensing parallel incident light on a focus, and
a directional light absorbing sheet having an aperture which transmits light from a specific direction and absorbs other light,
wherein the aperture of the directional light absorbing sheet is a pinhole array having an apertured pinhole arrayed near the focus of the microlens, and
wherein an aperture part of the pinhole is shaped into one of a truncated cone and a stepped truncated cone.

2. The rear projection type screen according to claim 1,
wherein a shape of the arrayed microlens is either of a square and a rectangle.

3. The rear projection type screen according to claim 1,
wherein an interval for the arrayed pinhole is so formed as to become increasingly wider from a central part of the screen toward a peripheral part thereof.

4. The rear projection type screen according to claim 1,
wherein a surface of the aperture formed by the pinhole array of the microlens array sheet forms a lens surface that is so curved as to be convexed or concaved.

5. The rear projection type screen according to claim 1,
wherein an upper bottom surface side of the aperture part shaped into the truncated cone forming the pinhole faces a side of the microlens array sheet, and
wherein the focus of the microlens is provided near the upper bottom surface.

6. The rear projection type screen according to claim 1,
wherein diffusing particles dispersed in a transparent resin are disposed inside the pinhole shaped into the truncated cone.

7. The rear projection type screen according to claim 1,
wherein a surface opposing the microlens of the microlens array sheet has emboss for scattering light is formed on at least the surface exposed by the pinhole.

8. The rear projection type screen according to claim 1,
wherein a lower bottom surface of the aperture part of the truncated cone forming the pinhole faces a side of the microlens array sheet,
wherein a projection shaped into a truncated cone similar to the truncated cone forming the pinhole is formed integrally on a surface opposing the microlens of the microlens array sheet, and
wherein the projection shaped into the truncated cone fits with the truncated cone forming the pinhole.

9. The rear projection type screen according to claim 8,
wherein, the truncated cone forming the pinhole has the upper bottom surface thereof tilted so that a height thereof is smallest at an end part thereof located farthest from a center of a screen surface, and
wherein an angle of the tilt is formed so that the truncated cone located farther from a center of the screen has a larger angle of the tilt.

10. The rear projection type screen according to claim 8,
wherein an upper bottom surface of the projection of the truncated cone forms a light scattering surface for scattering light.

11. The rear projection type screen according to claim 1,
wherein an exist side surface of the directional light absorbing sheet forms a light scattering surface for scattering light.

12. The rear projection type screen according to claim 1,
wherein the directional light absorbing sheet and the microlens array sheet are formed of thermoplastic polymeric material, and
wherein a softening point of the material forming the directional light absorbing sheet is higher than a softening point of the material forming the microlens array sheet.

13. The rear projection type screen according to claim 12,
wherein the directional light absorbing sheet and the microlens array sheet are formed integrally by thermal fusion bonding.

14. The rear projection type screen according to claim 1,
wherein the thermoplastic material forming the directional light absorbing sheet is formed by either of dispersing carbon particles or metal particles.

15. The rear projection type screen according to claim 1,
wherein the directional light absorbing sheet is formed of a metal plate whose surface having a light absorbing layer.

16. The rear projection type screen according to claim 15,
wherein the directional light absorbing sheet and the microlens array sheet are composed integrally by insert molding.

17. The rear projection type screen according to claim 1,
wherein the directional light absorbing sheet has a thickness of approximately 40 µm or more.

18. The rear projection type screen according to claim 1,
wherein a Fresnel lens sheet for controlling a spread angle of projection light is disposed in front of a light entrance surface of the microlens array sheet.

19. The rear projection type screen according to claim 1,
wherein any of or all of the directional light absorbing sheet, the microlens array sheet, and the Fresnel lens sheet are formed of antistatic material or subjected to antistatic prevention processing.
